Europäisches Patentamt

European Patent Office

Office européen des brevets

(11) Veröffentlichungsnummer: **0 432 311 A1**

# (12) EUROPÄISCHE PATENTANMELDUNG

(21) Anmeldenummer: 89123893.3

(22) Anmeldetag: 23.12.89

(51) Int. Cl.5: **B65G 39/09**

(30) Priorität: 15.12.89 DE 3941452

(43) Veröffentlichungstag der Anmeldung:
**19.06.91 Patentblatt 91/25**

(84) Benannte Vertragsstaaten:
**BE DE ES FR GB IT LU NL**

(71) Anmelder: **ERBÖ-MASCHINENBAU ERLEY & BÖNNINGER GMBH & CO. KG**
**Poststrasse 26-30**

W-4322 Sprockhövel 2(DE)

(72) Erfinder: **Otto, Herbert**
**Brockenberg 11**
**W-4322 Sprockhövel 2(DE)**

(74) Vertreter: **Herrmann-Trentepohl, Werner, Dipl.-Ing. et al**
**Postfach 1140 Schaeferstrasse 18**
**W-4690 Herne 1(DE)**

(54) **Förderbandtragrolle.**

(57) Bei einer Förderbandtragrolle (1) mit einem hohlzylindrischen Mantel (2), der an beiden Enden je eine Einsatzkappe (3) aufweist und beide Einsatzkappen jeweils den Außenring (14) eines Wälzlagers (15) eines Achsstummels (17) mitnehmen, wobei die Achsstummel (17) einen äußeren zur Abstützung der Rolle dienenden Abschnitt (18) aufweisen, ist erfindungsgemäß vorgesehen, daß innere Achsstummelabschnitte (16 a, 19) mit den inneren Laufringen der Wälzlager (15) eine Baueinheit bilden und die Einsatzkappen (3) den Innenraum des hohlzylindrischen Mantels (2) nach außen abschließen.

EP 0 432 311 A1

Die Erfindung betrifft eine Förderbandtragrolle gemäß dem Oberbegriff des Anspruches 1.

Erfindungsgemäße Förderbandtragrollen dienen in Förderbandanlagen zur Unterstützung des endlos umlaufenden Fördergurtes und können sowohl in Muldenrollensätzen des Obertrums wie auch einzeln zur Unterstützung des Untertrums verwendet werden. Hierbei stützt sich die erfindungsgemäße Förderbandtragrolle jeweils mit einem äußeren Abschnitt ihrer beiden Achsstummel in Rollenböcken des Bandtraggerüstes ab, wobei durch eine oder mehrere Abflachungen des äußeren Abschnittes der Achsstummel die Drehung des Rollenkörpers um die dadurch festgelegten beiden Achsstummel erzwungen wird.

Die erfindungsgemäße Förderbandtragrolle ist infolge ihres Aufbaus aus einem hohlzylindrischen Mantel und den beiden Einsatzkappen, welche zur Lagerung der Achsstummel notwendig sind von einfacher Bauart. In dieser kann nämlich der äußere Mantel mit einem Abschnitt geeigneter Länge eines vorzugsweise längsnahtgeschweißten Stahlrohres verwirklicht werden. Solche Förderbandtragrollen tragen infolge ihres einfachen Aufbaus einer Hauptforderung Rechnung, die sich aus der großen Anzahl von Förderbandtragrollen in einer gegebenen Bandanlage und deren verschleißbedingter Erneuerung ergibt.

Die Erfindung geht von einer vorbekannten Förderbandtragrolle dieser Art aus (DE-OS 28 00 562). Hierbei sind die beiden Achsstummelabschnitte, die im Durchmesser verminderten Enden einer durchgehenden Achse, deren Mittelabschnitt mit seinen beiden am Ansatz der Achsstummel liegenden Ringflächen den Innenring des Wälzlagers abstützt. Infolgedessen sind die zentralen Böden der beiden Einsatzkappen für das Durchstecken der durchgehenden Rollenachse ausgespart, jedoch unter Belassung eines umlaufenden Randes, welcher den Außenring des Wälzlagers axial abstützt. Hierdurch ergibt sich in jeder Einsatzkappe eine großflächige Bodenaussparung, welche mit einer Schmelzsicherung gegen das Innere des Rollenmantels normalerweise abgedichtet ist.

Im Betrieb einer derartigen Förderbandtragrolle treten aus unterschiedlichen Gründen Erwärmungen auf, welche das zur Dauerschmierung der Wälzlager verwendete Fett aufheizen und bei höheren Temperaturen einschließlich der Kunststoffabdichtungen zum Schmelzen und zur Entzündung bringen können. Die Schmelzsicherung sorgt in diesem Fall dafür, daß das brennende und abtropfende Fett in das Innere des Rollenmantels eindringt und nicht nach außen gelangt, wo es Brände auslösen könnte.

Bauartbedingt tritt zwischen dem Innenraum der Förderbandtragrolle und der Umgebung ein Luftaustausch auf, der bei Erwärmung der Förderbandtragrolle wegen des von innen nach außen gerichteten Druckgefälles Teile des Wälzlagerfettes nach außen führt. Dort gelangt das Wälzlagerfett auf die beanspruchten Flächen der äußeren Wälzlagerabdichtung. Unter normalen Umständen ist das erwünscht, weil dadurch das Anlaufen der Rollen aus dem Stillstand erleichtert und dabei die thermischen Beanspruchungen der Förderbandtragrollen vermindert werden und weil außerdem bei beschädigten oder ausgelaufenen Wälzlagern die aus Kunststoff bestehenden Außendichtungen einen Rollennotlauf ermöglichen.

Andererseits führt aber der mit dem Druckausgleich verbundene Luftaustausch zu Feuchtigkeitsniederschlägen auf der Innenseite des Rollenmantels mit einer entsprechenden Bildung von Rost, die so erheblich werden kann, daß dadurch in verhältnismäßig kurzer Zeit ein Austausch der davon betroffenen Förderbandtragrollen notwendig wird. Die beschriebenen und vorbekannten Bauarten setzen außerdem einen verhältnismäßig großen Aufwand voraus, nämlich hauptsächlich an jedem Rollenende ein vollständiges Wälzlager, das normalerweise als Kugellager ausgebildet wird. Diese Kugellager lassen sich bedarfsweise erneuern. Das führt dazu, daß nur teilweise beschädigte Förderbandtragrollen der bekannten Art repariert werden müssen, wenn wirtschaftlich nicht tragbare Materialverluste vermieden werden sollen. Ist die Förderanlage an einer für den Transport ungünstigen Stelle, etwa im Untertagebetrieb eingesetzt, so ist bereits der Rollentransport zur Reparatur und von der Reparatur zum Wiedereinsatz mit erheblichem Aufwand verbunden. Das führt im Ergebnis zu hohen Betriebskosten solcher Förderbandanlagen.

Der Erfindung liegt die Aufgabe zugrunde, eine auch unter ungünstigen Umständen auf einen Dauerbetrieb eingerichtete Förderbandtragrolle der eingangs beschriebenen allgemeinen Ausbildung zu schaffen, welche zudem günstiger eingesetzt werden kann.

Diese Aufgabe löst die Erfindung mit den Merkmalen den Anspruches 1. Weitere Merkmale der Erfindung sind Gegenstand der Unteransprüche.

Gemäß der Erfindung werden die notwendigen Teile der Rollenlagerung von Bauelementen der Förderbandtragrolle übernommen und dadurch überflüssig, nämlich die inneren Laufringe, welche durch ihre einteilige Ausbildung mit den beiden Achsstummeln ersetzt werden. Dadurch ist es möglich, auf die innere Abstützung der bisher benutzten Innenringe auf den Achsstummeln zu verzichten, was erfindungsgemäß zum Verschluß des Rolleninnenraumes mit Hilfe der Einsatzkappen genutzt wird. Deswegen hat die erfindungsgemäße Förderbandtragrolle auch keine durchgehende Rollenachse.

Diese Maßnahmen führen einerseits zu einer starken Herabsetzung des Bauaufwandes und damit zu einer Förderbandtragrolle, welche es ohne wirtschaftlich untragbare Verluste erlaubt, auf Reparaturen beschädigter Förderbandtragrollen zu verzichten, so daß sich eine Einwegförderbandtragrolle ergibt. Darüber hinaus führt der vollständige Verschluß des Innenraumes der neuen Förderbandtragrolle zur Unterbindung des bisher auftretenden Luftaustausches mit der Umgebung. Demgemäß lassen Korrosionen im Inneren der Förderbandtragrolle ausschließen. Auf die eingangs beschriebenen Maßnahmen bekannter Art, mit der äußeren Abdichtung der Wälzlager eine Notlaufeigenschaft der Förderbandtragrolle zu erzielen, braucht erfindungsgemäß nicht verzichtet zu werden. Die Abdichtung kann dann auch weitgehend brandsicher ausgebildet werden.

Erfindungsgemäß wird eine leichte Bauart der neuen Förderbandtragrollen bevorzugt. Sie ergibt sich aus der Verwirklichung der Merkmale des Anspruches 2. Hierbei besteht jeder Achsstummel praktisch aus einem Rohrabschnitt, welcher aus einem zylindrischen Rohrling durch einfache Maßnahmen in seine endgültige Ausbildung umgeformt wird. U. a. geschieht das durch Aufweiten des inneren offenen Abschnittes des Achsstummels und durch entsprechende Abplattung des geschlossenen äußeren Endes.

Die Laufeigenschaften der erfindungsgemäßen Förderbandtragrolle lassen sich bei Verwirklichung der Merkmale des Anspruches 3 verbessern. Mit den Merkmalen des Anspruches 4 wird der Sitz des äußeren Laufringes des Wälzlagers in der Einsatzkappe gewährleistet, ohne daß eine mehrteilige Ausbildung hierfür erforderlich ist.

Die Montage erfolgt dann von innen nach außen, d.h. mit einem nach den Merkmalen des Anspruches 4 axial geteilten äußeren Laufringes, wobei die Merkmale des Anspruches 6 genügend Raum innerhalb der Einsatzkappen belassen, um dort eine ausreichende Abdichtung mit Notlaufeigenschaft unterzubringen.

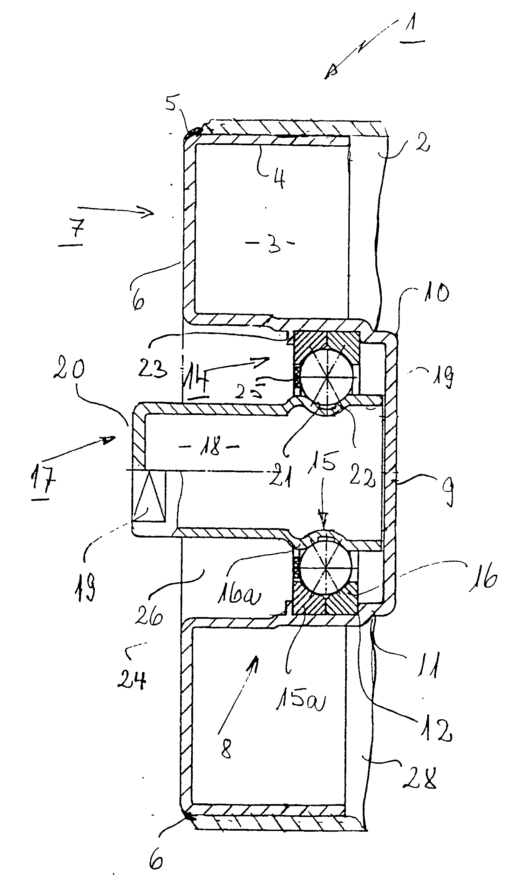

Die Einzelheiten, weitere Merkmale und andere Vorteile der Erfindung ergeben sich aus der nachfolgenden Beschreibung eines Auführungsbeispiels anhand der Zeichnung. Die Zeichnung zeigt in abgebrochener Darstellung und im Längsschnitt eines der beiden Enden einer Förderbandtragrolle gemäß der Erfindung.

Die in der Zeichnung allgemein mit (1) bezeichnete Förderbandtragrolle hat einen hohlzylindrischen Mantel (2), der an beiden Enden je eine Einsatzkappe (3) aufweist. Die beiden Einsatzkappen sind einschließlich der mit ihnen zusammenwirkenden Teile identisch ausgebildet, so daß es genügt, die in der Zeichnung dargestellte Einsatzkappe zu beschreiben.

Danach ist die Einsatzkappe ein aus einer Blechronde durch Umformen hergestellter tellerartiger Formkörper. Der geschlossene Tellerrand hat einen äußeren axialen Flansch (4), welcher einen geringeren Außendurchmesser als der von einem Stahlrohrabschnitt gebildete Außenmantel (2) aufweist. Der Rohrabschnitt ist mit Hilfe von Schweißpunkten (5, 6), welche über den Umfang des Tellerrandes verteilt sind mit der Einsatzkappe (3) drehfest verbunden. Der radial verlaufende innere Abschnitt (6) des Tellerrandes (7) endet an einem buchsenförmigen axialen Abschnitt (8), welcher zusammen mit dem radialen ebenen Boden (9) eine Baueinheit bildet. Durch diese Ausbildung der Einsatzkappen ergibt sich ein luftdichter Verschluß des Innenraumes (28) der Tragrolle. An die umlaufende Kante (10) des Bodens (9) schließt ein kurzer zylindrischer Abschnitt (11) an. welcher an einer ringförmigen Kante (12) endet. Diese dient als Anlagefläche für den Außenring (14) eines Kugellagers. Der Außenring ist axial in zwei Hälften (15a, 16) geteilt.

Der Innenring des Wälzlagers (15) wird von einem Abschnitt (16a) eines Achsstummels (17) gebildet. Dieser liegt zwischen einem äußeren hohlzylindischen Abschnitt (18) und einem inneren hohlzylindrischen Abschnitt (19), welcher von dem Hohlzylinder (11) der Einsatzkappe überdeckt ist. Zwischen der Stirnkante des inneren Abschnittes (19) und dem Boden (9) der Einsatzkappe befindet sich ein Spiel, das eine Drehung der Einsatzkappe gegenüber dem stillstehenden Achsstummels (17) ermöglicht.

Der Achsstummel weist außen mindestens eine Abplattung (19) auf. Diese korrespondiert mit einer entsprechenden Fläche in einem nicht dargestellten Rollenkäfig, so daß die Drehung des hohlzylindrischen Mantels (2) um die Achsstummel erzwungen wird, sobald die Rolle von einem Fördergurt angetrieben wird. Der äußere Abschnitt (18) ist durch einen axial ebenen Boden (20) geschlossen. Dagegen ist der innere Abschnitt (19) offen.

Der mittlere Abschnitt (16a) weist eine Rille (21) auf, welche durch eine sinusförmige Ausformung des hohlzylindrischen Achsstummels erzeugt ist. Die Flanken der Ausformung dienen als Laufbahnen für die als Wälzkörper dienenden Kugeln. Die Abschnitte (16a) und (19) sind zur Bildung des inneren Laufringes des Wälzlagers (15) im Durchmesser gegenüber dem äußeren Abschnitt (18) vergrößert. Auf der Außenseite des Rillengrundes ist eine Ringnut (22) ausgespart.

Zur Montage der Teile wird zunächst die innere Hälfte (16) des äußeren Laufringes in den buchsenförmigen Teil (8) des Tellerbodens bis zur Ringfläche (12) eingeführt. Sodann werden die Kugeln auf der inneren Flanke (22) des inneren Ringes (16a) gelegt. Hiernach führt man die äußere Hälfte (15a) des äußeren Laufringes des Wälzlagers (15) ein und bringt dann mit den Kugeln und dem inneren Ring (16) zur Anlage. Mit Hilfe mehrerer auf dem Innenumfang des mittleren Abschnittes (8) der Einsatzkappe vorgenommen Verprägungen (23, 24) werden die beschriebenen Teile des Wälzlagers festgelegt. Das Wälzlagers ist mit einer Dauerschmierung versehen, die mit Hilfe einer Dichtung (25) festgehalten wird.

Zwischen den Verprägungen (23, 24) und dem radialen Tellerrand (6) befindet sich ein im wesentlichen von Zylinderflächen begrenzter Innenraum (26). In diesem können Dichtungen untergebracht werden, welche als Abdichtung gegen den mit der Dauerschmierung gefüllten Raum des Wälzlagers und als Notlauflager beim Versagen des Wälzlagers Verwendung finden können.

## Ansprüche

1. Förderbandtragrolle (1) mit einem hohlzylindrischen Mantel (2), der an beiden Enden je eine Einsatzkappe (3) aufweist und beide Einsatzkappen jeweils den Außenring (14) eines Wälzlagers (15) eines Achsstummels (17) mitnehmen, wobei die Achsstummel (17) einen äußeren zur Abstützung der Rolle dienenden Abschnitt (18) aufweisen, dadurch gekennzeichnet, daß innere Achsstummelabschnitte (16 a, 19) mit den inneren Laufringen der Wälzlager (15) eine Baueinheit bilden und die Einsatzkappen (3) den Innenraum des hohlzylindrischen Mantels (2) nach außen abschließen.

2. Förderbandtragrolle nach Anspruch 1, dadurch gekennzeichnet, daß die Achsstummel (17) aus einem Hohlzylinder bestehen, in dem das den äußeren Abschnitt (18) bildende Ende nach außen abgeschlossen ist und das den inneren Abschnitt (19) bildende Ende offen ist, wobei der innere Laufring des Wälzlagers (15) von einer als Wälzbahn dienenden Rille (21, 22) gebildet wird, die den im Durchmesser vergrößerten inneren Endzylinder mit dem demgegenüber einen kleineren Durchmesser aufweisenden äußeren Endzylinder (18) verbindet.

3. Förderbandtragrolle nach einem der Ansprüche 1 oder 2, dadurch gekennzeichnet, daß die inneren Wälzbahnen (21, 22) mit einer äußeren Ringnut (25) unterbrochen sind, welche im Rillengrund angeordnet ist.

4. Förderbandtragrolle nach einem der Ansprüche 1 oder 2, dadurch gekennzeichnet, daß die Einsatzkappen (3) einen inneren Ringflansch (12) als Anlage für den Außenring (14) des Wälzlagers (15) aufweisen, welcher mit Hilfe einer Mehrzahl von am Innenumfang der Einsatzkappe (3) vorgenommenen Verprägungen (23, 24) festgelegt ist.

5. Förderbandtragrolle nach Anspruch 1 und einem oder mehreren der Ansprüche 2 bis 4, dadurch gekennzeichnet, daß der Wälzlageraußenring (14) axial in zwei Hälften (15, 16) unterteilt ist.

6. Förderbandtragrolle nach Anspruch 1 und einem oder mehreren der Ansprüche 2 bis 5, gekennzeichnet durch einen nach außen offenen und im wesentlichen von Zylinderflächen begrenzten Hohlraum (26) zur Aufnahme von Wälzlagerabdichtungen und/oder Notlaufringen.

**Europäisches Patentamt**

# EUROPÄISCHER RECHERCHENBERICHT

Nummer der Anmeldung

**EP 89 12 3893**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 606 659  (M.J. HOGAN)<br>* Spalte 3, Zeile 23 - Spalte 4, Zeile 30; Fig. *<br>– – – | 1 | B 65 G 39/09 |
| A | | 3,6 | |
| A | GB-A-2 045 871  (SAPCO)<br>* Ansprüche 2,3,8,18 *<br>– – – | 2 | |
| A | GB-A-2 089 938  (MANNESMANN)<br>* Seite 2, Zeilen 47-84; Fig. *<br>– – – | 1,2 | |
| A | US-A-4 339 159  (D.A. MILLER)<br>* Spalte 3, Zeilen 33-44; Figur 6 *<br>– – – – – | 1,4 | |
| | | | **RECHERCHIERTE SACHGEBIETE (Int. Cl.5)**<br><br>B 65 G<br>F 16 C |

Der vorliegende Recherchenbericht wurde für alle Patentansprüche erstellt

| Recherchenort | Abschlußdatum der Recherche | Prüfer |
|---|---|---|
| Den Haag | 20 März 91 | VAN ROLLEGHEM F.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
......................
& : Mitglied der gleichen Patentfamilie, übereinstimmendes Dokument